# EUROPÄISCHE PATENTSCHRIFT

(11) **EP 3 215 380 B1**
(45) Veröffentlichungstag und Bekanntmachung des Hinweises auf die Patenterteilung: **18.08.2021**
(21) Anmeldenummer: 15790893.0
(22) Anmeldetag: 02.11.2015
(51) Int. Cl.: B60K 6/26, B60K 6/46, F02B 63/04

(54) **HYBRIDFAHRZEUG UND STROMAGGREGAT**
HYBRID VEHICLE AND GENERATING SET
VÉHICULE HYBRIDE

(30) Priorität: 07.11.2014 DE 102014116302
(43) Veröffentlichungstag der Anmeldung: 13.09.2017
(73) Patentinhaber: Obrist Technologies GmbH, 6890 Lustenau (AT)
(72) Erfinder: LAIMBOECK, Franz, A-8051 Thal (AT); OBRIST, Frank, A-6900 Bregenz (AT)
(74) Vertreter: Kilchert, Jochen
(86) Internationale Anmeldenummer: PCT/EP2015/075364
(87) Internationale Veröffentlichungsnummer: WO 2016/071247

(56) Entgegenhaltungen:
- WO-A1-2012/056275
- WO-A1-2012/163902
- WO-A1-2016/058810
- WO-A2-2012/069199
- DE-A1-102010 018 020
- DE-A1-102014 115 043
- GB-A- 682 881
- US-A1- 2013 035 817

## Beschreibung

Die Erfindung betrifft ein mehrspuriges Personenkraftfahrzeug, insbesondere ein Hybridfahrzeug, mit einem Stromaggregat, das mindestens einen über einen Hubkolbenmotor antreibbaren Generator umfasst, einer Batterie und mindestens einem Elektromotor, wobei der Hubkolbenmotor, der Generator und der mit wenigstens einem Antriebsrad des Fahrzeugs mechanisch koppelbare Elektromotor zum Antrieb des Fahrzeugs seriell miteinander verbunden sind.

Bei seriellen Hybridantrieben erfolgt der Antrieb weit überwiegend, wenn nicht ausschließlich rein elektrisch. Dabei wird die elektrische Energie von einer Brennkraftmaschine in Verbindung mit einem Generator an Bord erzeugt. Die Batterie als Energiepuffer ermöglicht die totale energetische Entkopplung der Brennkraftmaschine vom Fahrzeugantrieb. Serielle Hybridantriebe eignen sich deshalb bevorzugt im Hinblick auf die sich verschärfenden Abgasvorschriften, da die Brennkraftmaschine weitgehend unabhängig von der aktuellen Antriebsaufgabe im bestmöglichen Wirkungsgradbereich bzw. emissionsoptimiert betrieben werden kann.

Ein Personenkraftfahrzeug der eingangs genannten Art ist beispielsweise aus WO 2012/163902 A1 bekannt. Das Stromaggregat ist im Heck des Fahrzeugs liegend eingebaut und beeinträchtigt so das Kofferraumvolumen des Fahrzeugs. Der Erfindung liegt die Aufgabe zu Grunde, einen seriellen Hybridantrieb für ein mehrspuriges Personenkraftfahrzeug zur Verfügung zu stellen, der mit vergleichsweise geringem Aufwand realisierbar ist, einem möglichst schadstoffarmen Fahrzeugbetrieb bei optimalen Antriebsbedingungen und darüber hinaus eine besonders ruhige - geräuschminimierte und weitgehend vibrationsfreie - Arbeitsweise der gesamten Antriebseinheit mit einem platzsparenden Aufbau kombiniert.

Diese Aufgabe wird nach der Erfindung dadurch gelöst, dass das aus Hubkolbenmotor und Generator aufgebaute Stromaggregat in Fahrzeuglängsrichtung eine Tiefe und quer zur Fahrzeuglängsrichtung eine Breite aufweist, wobei die Breite höchstens 750 mm, insbesondere höchstens 700 mm, insbesondere höchstens 660 mm, insbesondere höchstens 640 mm, und die Tiefe höchstens 310 mm, insbesondere höchstens 280 mm, insbesondere höchstens 260 mm, insbesondere höchstens 250 mm, beträgt. Das Stromaggregat weist erfindungsgemäß zwei Generatoren auf, die jeweils mit einer der Kurbelwellen antriebsverbunden sind.

Diese Baumaße, die durch eine kompakt bauende Einheit des Stromaggregats, bestehend aus Hubkolbenmotor und Generator, erreichbar ist, ermöglicht im Frontbereich des Fahrzeugs die Unterbringung größerer Radhäuser für die lenkbaren Räder und damit mehr Lenkeinschlag und kleinere Wendekreise. Darüber hinaus ist bei entsprechender Anordnung dieses Stromaggregats, vorzugsweise zwischen der Vorderachse und einem Fahrgastraum, insbesondere einer quer zur Fahrtrichtung verlaufenden Spritzwand zwischen Fahrgast- und Motorraum im Frontbereich des Fahrzeugs im Crash-Fall eine wesentlich vergrößerte Knautschzone unterzubringen, die auch einen verbesserten Fußgängerschutz möglich macht.

Das Stromaggregat nach der Erfindung mit Hubkolbenmotor und Generator kann als eine, insbesondere einheitlich handhabbare, kompakt bauende, vorzugsweise in einem thermisch- und/oder schwingungs- und/oder schalldämmbaren Gehäuse anordenbare Einheit aufgebaut sein.

Die kompakte Bauweise dieses Stromaggregats lässt sich insbesondere dadurch erreichen, dass der Hubkolbenmotor vorzugsweise aus zwei Kolben-Zylinder-Einheiten in Tandem-Anordnung aufgebaut ist, wobei die beiden Kolben-Zylinder-Einheiten auf zwei gegenläufig rotierbare Kurbelwellen arbeiten.

Besonders kompakt kann das Stromaggregat dann aufgebaut werden, wenn die zwei Kolben-Zylinder-Einheiten in Tandem-Anordnung mit gegenläufig rotierbaren Kurbelwellen ausgestattet sind, auf denen radial einander überlappend je ein Generator angeordnet ist. Dabei können die Generatoren jeweils an gegenüberliegenden Enden der Kurbelwellen oder in Axialrichtung der Kurbelwellen versetzt an diesen aufgebracht sein.

Der Antrieb eines Personenkraftfahrzeuges nach der Erfindung kann vorzugsweise über mindestens ein Antriebsrad an einer Hinterachse erfolgen. Denkbar ist aber ebenso, dass mehrere Elektromotoren vorgesehen sind, wobei wenigstens ein erster Elektromotor mit einem Antriebsrad an der Vorderachse, und ein zweiter Elektromotor mit einem Antriebsrad an der Hinterachse gekoppelt ist. Für den Fachmann versteht es sich von selbst, dass ein Allradantrieb, z.B. mittels Radnabenmotoren, bei diesem Fahrzeugkonzept ohne weiteres verwirklichbar ist.

Aus Sicherheitsgründen, z.B. im Crash-Fall, sollte die Batterie bei einem Fahrzeug nach der Erfindung unterhalb des Fahrgastraums und idealerweise im besonders Crash-stabilen Bereich zwischen den B-Säulen des Fahrzeugs angeordnet werden. Die Batterie sollte dabei vorzugsweise in einem Batteriegehäuse angeordnet sein, wobei das Batteriegehäuse gleichzeitig so in den Fahrgestellrahmen des Fahrzeuges integriert ist, dass es eine tragende Struktur für das Fahrzeug bildet. Besonders vorteilhaft ist es, wenn das die Batterie aufnehmende Batteriegehäuse gleichzeitig als Tragstruktur zur Befestigung von Sitzschienen für Personensitze im Fahrzeug, z.B. der beiden Frontsitze, aufgebaut ist.

Die Batterie kann mindestens einen Zellenblock, vorzugsweise wenigstens zwei Zellenblöcke aufweisen, die durch mehrere mechanisch und elektrisch miteinander verbundene Rundzellen gebildet sind, wobei wenigstens ein durchströmbares Kühlelement angeordnet ist.

Die Batterie bzw. die Zellenblöcke der Batterie können vorzugsweise über einen mit einem veränderbaren Innenvolumen gegenüber dem Batteriegehäuse verspannbar angeordnet sein.

In einer bevorzugten Ausführungsform ist das Stromaggregat für ein mehrspuriges Personenkraftfahrzeug mit einem Hubkolbenmotor mit mindestens einem Generator ausgestattet, wobei diese mechanisch miteinander koppelbar sind und wobei der Hubkolbenmotor vorzugsweise zwei Kolben, die in zwei Zylindern in Tandem-Anordnung geführt sind und zwei gegenläufig rotierbare Kurbelwellen aufweist und dabei eine Breite von höchstens 750 mm, insbesondere von höchstens 700 mm, insbesondere von höchstens 660 mm, insbesondere von höchstens 640 mm, und eine Tiefe von höchstens 310 mm, insbesondere höchstens 280 mm, insbesondere höchstens 260 mm, insbesondere höchstens 250 mm, und eine Höhe von höchstens 580mm, vorzugsweise maximal 560 mm aufweist.

Die Abgasanlage des Hubkolbenmotors sollte aus Platzgründen und zum einfachen Aufbau innerhalb des Stromaggregats in einer Ebene mittig zwischen den Zylindern verlaufend angeordnet sein; ihr Durchtritt durch das Aggregatgehäuse erfolgt vorzugsweise wärme- und schwingungsisoliert. Außerhalb des Aggregatgehäuses weist die Abgasanlage mindestens einen Schalldämpfer und ein Endrohr auf. Über das Endrohr kann ein Strömungsrohr rundumlaufend angeordnet sein, so dass zwischen dem Strömungsrohr und dem Endrohr ein ringförmiger Ejektorkanal zur Beschleunigung des Abgasaustritts und zur Abkühlung der Abgasanlage unter Fahrtwindeinwirkung erzeugt wird.

In einer besonders bevorzugten Ausführungsweise erstreckt sich der Schalldämpfer der Abgasanlage vor und unterhalb einer Mittelkonsole, die im Wesentlichen in Längsrichtung des Fahrzeugs verläuft und wenigstens teilweise in den Fahrgastraum hinein ausgewölbt verläuft; die Austrittsöffnung des Endrohrs sowie des Ejektorkanals ist im Bereich des Endes der Mittelkonsole angeordnet. Ermöglicht wird diese vorteilhafte Ausgestaltung der Abgasanlage durch den Hubkolbenmotor mit zwei Kolben-Zylinder-Einheiten. Die kurze Bauweise bzw. der kurze Verlauf der Abgasanlage mit Schalldämpfer und ggfs. Katalysatoren lediglich bis maximal in den Bereich der Mittelkonsole des Fahrgastraums erlaubt es, die Auslassöffnung des Endrohrs unmittelbar unter dieser Mittelkonsole vorzusehen.

Wie bereits erwähnt, erlaubt dieser platzsparende Aufbau bzw. Einbau eines Stromaggregats nach der Erfindung eine bisher nicht für möglich gehaltene Gestaltung des Frontbereichs eines Fahrzeugs (mehr Lenkeinschlag, größere Knautschzone usw.) bzw. bei gleicher Fahrzeuggröße einen wesentlich größeren und besser nutzbaren Innenraum.

Die Konstruktion der Antriebseinheit macht es möglich, auf einen Mitteltunnel ggf. ganz zu verzichten.

Bei entsprechender Anordnung ist ein tiefer Schwerpunkt für das Gesamtfahrzeug problemlos erreichbar.

In den Figuren der Zeichnung ist schematisch der Stand der Technik gegenüber einem Ausführungsbeispiel des Erfindungsgegenstands dargestellt. Anhand dieser Darstellung sollen im Folgenden die Merkmale, Einzelheiten und Besonderheiten des Erfindungsgegenstandes näher erläutert werden.

Es zeigt:
- Fig. 1: eine schematische Ansicht eines Fahrzeugs nach dem Stand der Technik;
- Fig. 2: eine schematische Draufsicht auf ein nach dem Stand der Technik aufgebautes Fahrzeug;
- Fig. 3: eine Ansicht eines mit einem kompakten Stromaggregat nach der Erfindung aufgebauten Fahrzeugs in schematischer Darstellung und
- Fig. 4: eine Draufsicht auf das Fahrzeug nach Fig. 3.

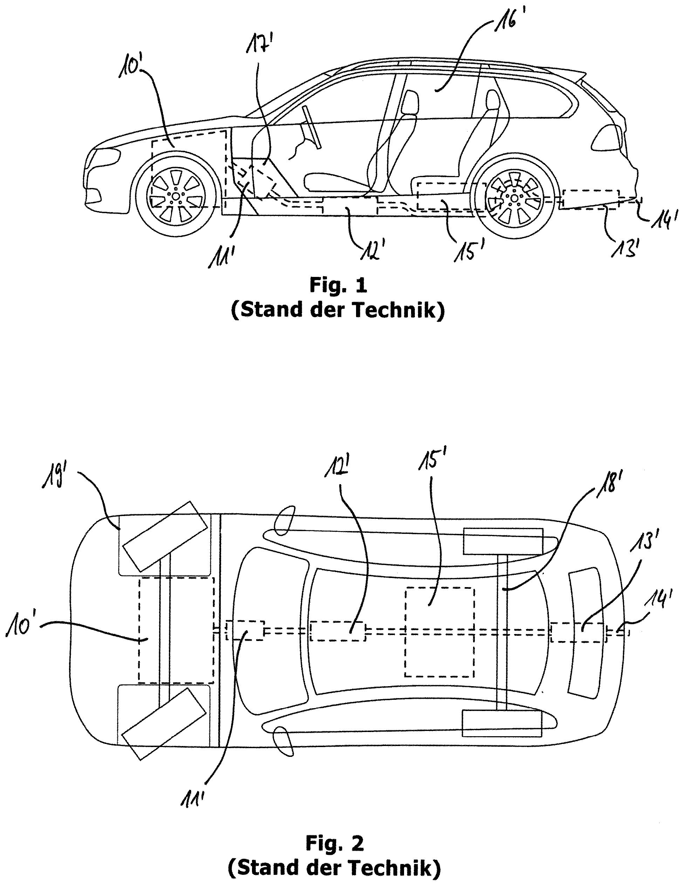

Ein Fahrzeug 16' nach Fig. 1 und 2 ist in seinem Frontbereich mit einem Antriebsaggregat 10', bestehend aus Hubkolbenmotor, einem oder mehreren Generatoren und mindestens einem Elektromotor und ggf. mit Nebenaggregaten ausgestattet. Aus den Fig. 1 und 2 wird erkennbar, dass das relativ großbauende Antriebsaggregat 10' die Gestaltungsmöglichkeiten im Frontbereich eines Fahrzeugs 16' und insbesondere auch den für die Radkästen 19' zur Verfügung stehenden Raum und damit den Wendekreis des Fahrzeugs erheblich einschränkt. Bei der Gestaltung der Knautschzone für den Crash-Fall und zur Fußgängersicherheit muss mit eingeschränkten Raumvorgaben umgegangen werden, die zudem noch durch die üblichen aerodynamischen Gegebenheiten beeinträchtigt werden.

Üblicherweise ist beim Stand der Technik bei Hybridfahrzeugen der Energiespeicher 15' unterhalb der hinteren Sitzreihe des Fahrzeugs und direkt vor der Hinterachse 18' angeordnet. Die Abgasanlage 11', 12', 13', 14' ist in herkömmlicher Weise ausgehend vom Antriebsaggregat 10'über eine Mittelkonsole 17' längs unter dem Boden des Fahrzeugs 16' verlaufend und Schalldämpfer, Katalysatoren usw. umfassend bis zu einem im Heckbereich des Fahrzeugs 16' angeordneten Endrohr 14' der Abgasanlage geführt.

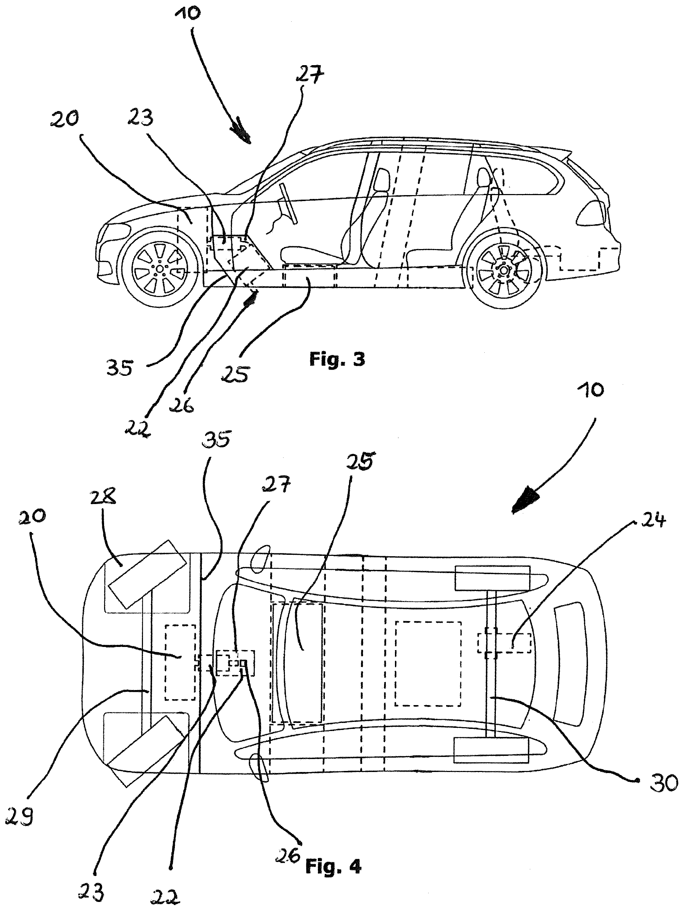

Im Unterschied zu dem in den Fig. 1 und 2 dargestellten Fahrzeug weist ein nach der Erfindung (siehe Fig. 3 und 4) aufgebautes Fahrzeug 10 im Frontbereich das sehr kompakt bauende Stromaggregat 20, umfassend einen Hubkolbenmotor mit zwei Generatoren auf. Dieses kompakt bauende Stromaggregat 20 ist vorzugsweise im Wesentlichen oberhalb oder hinter der Vorderachse 29 und vor einer den Fahrgastraum vom Motorraum trennenden Spritzwand 35 angeordnet. Das Stromaggregat 20 mit dem Hubkolbenmotor und dem Generator kann innerhalb eines einheitlich handhabbaren, kompakt aufgebauten, als Einheit in einem gemeinsamen Aggregategehäuse untergebracht sein, das vorzugsweise thermisch-, schwingungs- und schallgedämpft ausgeführt sein kann.

Wie die Fig. 3 und 4 im Unterschied zu den Darstellungen in den Fig. 1 und 2 deutlich zeigen, erlaubt die kompakte Einheit des Stromaggregats 20 eine wesentlich freiere Gestaltung des Frontbereichs eines Fahrzeugs im Hinblick auf Crash-Sicherheit und Fußgängerschutz und darüber hinaus die Unterbringung größerer Radhäuser 28 und damit die Umsetzung eines wesentlich größeren Lenkanschlags der gelenkten Räder und dadurch einen verringerten Wendekreis. Ferner erlaubt der Hubkolbenmotor mit zwei Kolben-Zylinder-Einheiten in Tandem-Anordnung den Einbau einer kurzbauenden und damit gewichtsgünstigen und platzsparenden Abgasanlage.

Durch den platzsparenden, aufgrund seiner Kompaktheit räumlich günstig unterzubringenden Aufbau des kompletten Stromaggregats 20 und dessen entsprechenden Einbau lässt sich bei identischen Außenmaßen im Vergleich mit einem konventionellen Fahrzeug mit Brennkraftmaschinen- bzw. Hybrid-Antrieb im Innenraum ein größeres Platzangebot erreichen, so dass z.B. ohne Weiteres ein 5+2-Sitzer (siehe schematische Darstellung in Fig. 3) oder auch ein 7-Sitzer möglich wird.

Details zum Aufbau des Stromaggregats können z.B. der DE 10 2014 115 043.0 entnommen werden.

Der Antrieb eines Personenkraftfahrzeugs nach der Erfindung kann sowohl über die Hinterräder als auch über die Vorderräder - und wie bereits erwähnt - auch in Allrad-Ausführung erfolgen. Im schematisch dargestellten Ausführungsbeispiel ist ein Elektromotor 24 zum Antrieb über die Hinterachse 30 des Fahrzeugs 10 vorgesehen. Besonders bevorzugt wird ein Antriebskonzept gesehen, bei dem über einen Elektromotor ein Antriebsrad an der Vorderachse 29 (in der Zeichnung nicht dargestellt) und ein weiterer Elektromotor 24 zum Antrieb eines Rads an der Hinterachse 30 vorgesehen wird; für die Fahreigenschaften des Fahrzeuges besonders günstig ist dabei eine diagonal versetzte Anordnung der angetriebenen Räder. Ebenso denkbar ist eine Antriebsvariante mit z.B. vier Radnaben-Elektromotoren oder auch eine Allrad-Variante mit je einem Elektromotor auf der Vorder- und auf der Hinterachse. Jede dieser Antriebsvarianten kann mit entsprechenden Getriebeeinheiten, z.B. Differentialen usw. zur entsprechenden Verlagerung bzw. zum Ausgleich auf die Räder einwirkender unterschiedlicher Antriebsmomente bis hin zur gezielt unterschiedlichen Verteilung von Momenten auf die Räder, sog. Torque Vectoring ausgestattet sein.

Aufgrund der relativ hohen elektrischen Energiedichte ist beim Fahrzeugkonzept nach der Erfindung der Anordnung der Batterie 25 ganz besondere Aufmerksamkeit gewidmet worden: Die aus allen Berichten zu Crash-Rekonstruktionen als am wenigstens in Mitleidenschaft von Verformungen betroffene Zone bei Fahrzeugen ist der im Wesentlichen zentrale Bereich zwischen den B-Säulen und in entsprechendem Abstand zu diesen. Dementsprechend ist es zweckmäßig, die Batterie in diesem Bereich anzuordnen, wobei dieser zentrale Bereich im Unterboden des Fahrzeugs nicht mehr als 70%, vorzugsweise nicht mehr als 60% der gesamten Fahrzeugbreite einnehmen sollte. Die Batterie sollte in einem Batterie-Gehäuse untergebracht sein, das gleichzeitig eine tragende Struktur im ohnehin stabilen Fahrgestellrahmen des Fahrzeugs bildet oder das in einer entsprechend stabilen Ausformung im Unterboden/Fahrzeugrahmen angeordnet ist. In idealer Weise kann diese Tragstruktur des Unterbodens/Fahrzeugrahmens so ausgebildet sein, dass sie gleichzeitig eine Tragstruktur zur Befestigung der Sitzschienen für Personensitze des Fahrzeuges bildet; aufgrund der Lage im Fahrzeug (Bereich der B-Säulen) sind dies vorzugsweise die Vordersitze eines Fahrzeugs.

Die Batterie 25 sollte mindestens einen Zellenblock, vorzugsweise wenigstens zwei Zellenblöcke aufweisen, die durch mehrere mechanisch und elektrisch miteinander verbundene Rundzellen gebildet sind. Zwischen Batteriegehäuse und Zellenblock bzw. Zellenblöcken können durchströmbare Kühlelemente zur Kühlung der Batteriezellen angeordnet sein. Bei zwei oder mehreren Zellenblöcken können ausserdem zwischen den einzelnen Zellenblöcken wenigstens ein oder weitere durchströmbare Kühlelemente angeordnet werden.

Die Zellenblöcke der Batterie 25 können von einem oder mehreren Druckbeuteln mit einem veränderbaren Innenvolumen ganz oder weitgehend umfasst sein, mit dem die Zellenblöcke gegenüber dem Batteriegehäuse verspannbar geschützt und gesichert im Batteriegehäuse angeordnet sind.

Wie ferner erwähnt, ist es besonders zweckmäßig, die Abgasanlage des Hubkolbenmotors innerhalb des Stromaggregats 20 platzsparend und mit relativ kurzem Verlauf in einer Ebene mittig zwischen den Zylindern anzuordnen. Nach dem Austritt der Abgasanlage aus dem Aggregategehäuse des Stromaggregats 20 kann die Abgasanlage mit den technisch notwendigen Komponenten, z.B. Schalldämpfer 22, Katalysator 23 usw. bestückt sein; diese können in entsprechend sicherer und raumsparender Anordnung in oder unter einer im Wesentlichen in Längsrichtung des Fahrzeugs angeordneten und wenigstens teilweise in den vorderen Fußraum des Fahrgastraums ausgewölbt hineinragenden Mittelkonsole 27 angeordnet sein. Die Abgasanlage kann je nach den spezifischen Erfordernissen mit einem Endrohr 26 zentral bis mittig im mittleren Fahrzeugbereich unterhalb des Fahrzeugbodens, zweckmäßigerweise mit Gasaustrittsöffnungen im Wesentlichen Richtung Fahrbahn gerichtet, enden. Das Endrohr 26 kann dabei in Höhe des Fußbereichs von Fahrer bzw. Beifahrer enden (siehe Fig. 3 und 4 in der Zeichnung); bei größerem Platzbedarf für die Abgasanlage ist es denkbar, die Auslassöffnung des Endrohrs 26 im Bereich in etwa vor den Vordersitzen und vor bzw. unterhalb des Batteriegehäuses anzuordnen.

Bei einer derartigen Anordnung der Abgasanlage sind z.B. die bestehenden Auflagen im Hinblick auf die Austrittstemperaturen von Motorabgasen (z.B. in den USA) zur Verhinderung von Bränden zwingend zu beachten. Deshalb kann es zweckmäßig sein, das Abgasendrohr 26 umlaufend im Abstand mit einem auf beiden Seiten (also nach vorne und nach hinten) offenen Strömungsrohr zu umkleiden, das mit dem Endrohr selbst einen ringförmigen Ejektorkanal bildet. Im Fahrbetrieb wird dabei durch die Luftströmung innerhalb des Ejektorkanals das Endrohr 26 ständig entsprechend abgekühlt, so dass jedenfalls an der Außenseite der Abgasanlage (z.B. Ejektorkanal) eine Absenkung der Oberflächentemperatur auf ein gefahrloses Niveau erreicht wird.

Die Kühlung beruht dabei auf der durch das Endrohr 26 mit seiner hohen GasTemperatur und der relativ hohen Gas-Austrittsgeschwindigkeit und des dadurch im dieses umgebenden Strömungsrohr bzw. im zwischen Endrohr und Strömungsrohr gebildeten Ejektorkanal erzeugten Unterdrucks. Über diesen Unterdruck wird Kühlluft angesaugt, wobei die Ansaugwirkung in einem gewissen Umfang auch noch im Standbetrieb anhält. Unterstützt werden kann diese Kühlungswirkung durch die Luftströmung im Ejektorkanal z.B. bei einer Anordnung der Abgasanlage im strömungsungünstigen Bereich dadurch, dass über ein z.B. an der Stirnseite des Fahrzeuges angeordnetes Zuführrohr Luftstrom zum Ejektorkanal geführt wird.

### Bezuaszeichenliste

- 16': Fahrzeug
- 10': Antriebsaggregat
- 15': Energiespeicher
- 11', 12', 13', 14': Abgasanlage
- 14': Endrohr der Abgasanlage
- 17': Mittelkonsole
- 18': Hinterachse
- 19': Radkasten
- 10: Fahrzeug
- 20: Stromaggregat
- 22: Schalldämpfer
- 23: Katalysator
- 24: Elektromotor
- 25: Batterie
- 26: Endrohr
- 27: Mittelkonsole
- 28: Radkasten
- 29: Vorderachse
- 30: Hinterachse
- 35: Spritzwand

## Patentansprüche

1. Mehrspuriges Personenkraftfahrzeug, insbesondere Hybridfahrzeug, mit einem Stromaggregat (20), das mindestens einen über einen Hubkolbenmotor antreibbaren Generator umfasst, einer Batterie (25) und mindestens einem Elektromotor (24), wobei der Hubkolbenmotor, der Generator und der mit wenigstens einem Antriebsrad des Fahrzeugs mechanisch koppelbare Elektromotor (24) zum Antrieb des Fahrzeugs seriell miteinander verbunden sind und der Hubkolbenmotor zwei Kurbelwellen aufweist, **dadurch gekennzeichnet, dass**
das aus Hubkolbenmotor und Generator aufgebaute Stromaggregat (20) in Fahrzeuglängsrichtung eine Tiefe und quer zur Fahrzeuglängsrichtung eine Breite aufweist, wobei die Breite höchstens 750 mm und die Tiefe höchstens 310 mm betragen, und wobei das Stromaggregat (20) zwei Generatoren aufweist, die jeweils mit einer der beiden Kurbelwellen antriebsverbunden sind.

2. Personenkraftfahrzeug nach Anspruch 1,
**dadurch gekennzeichnet, dass**
das Stromaggregat (20) im Wesentlichen oberhalb der Vorderachse oder zwischen der Vorderachse und einem Fahrgastraum, insbesondere einer Spritzwand (35), des Fahrzeugs angeordnet ist.

3. Personenkraftfahrzeug nach Anspruch 1 oder 2,
**dadurch gekennzeichnet, dass**
das Stromaggregat (20) mit dem Hubkolbenmotor und dem Generator eine in einem thermisch- und/oder schwingungs- und/oder schalldämmbaren Aggregatgehäuse angeordnete Einheit bildet.

4. Personenkraftfahrzeug nach einem der vorhergehenden Ansprüche,
**dadurch gekennzeichnet, dass**
der Hubkolbenmotor zwei Kolben-Zylinder-Einheiten in Tandem-Anordnung aufweist , die auf zwei gegenläufig rotierbare Kurbelwellen arbeiten.

5. Personenkraftfahrzeug nach einem der vorhergehenden Ansprüche,
**dadurch gekennzeichnet, dass**
der Antrieb über mindestens ein Antriebsrad an einer Hinterachse (30) des Fahrzeugs erfolgt.

6. Personenkraftfahrzeug nach einem der vorhergehenden Ansprüche,
**dadurch gekennzeichnet, dass**
mehrere Elektromotoren (24) vorgesehen sind, wobei wenigstens ein erster Elektromotor (24) mit einem Antriebsrad an der Vorderachse (29) und ein zweiter Elektromotor (24) mit einem Antriebsrad an der Hinterachse (30) gekoppelt ist.

## Claims

1. A multi-track passenger vehicle, in particular a hybrid vehicle, with a generating set (20) which comprises at least one generator that is able to be driven via a reciprocating piston engine, with a battery (25) and with at least one electric motor (24), wherein the reciprocating piston engine, the generator and the electric motor (24), which is able to be mechanically coupled with at least one driving wheel of the vehicle, are connected with one another in series in order to drive the vehicle, and the reciprocating piston engine has two crankshafts, **characterized in that**
the generating set (20), composed of reciprocating piston engine and generator, has a depth in the longitudinal direction of the vehicle and a width transversely to the longitudinal direction of the vehicle, wherein the width is maximally 750 mm and the depth is maximally 310 mm, and wherein the generating set (20) has two generators, which are respectively drivingly connected with one of the two crankshafts.

2. The passenger vehicle according to Claim 1,
**characterized in that**
the generating set (20) is arranged substantially above the front axle or between the front axle and a passenger compartment, in particular a fire wall (35), of the vehicle.

3. The passenger vehicle according to Claim 1 or 2,
**characterized in that**
the generating set (20) with the reciprocating piston engine and with the generator forms a unit arranged in an assembly housing which is able to be insulated thermally and/or with respect to vibration and/or with respect to sound.

4. The passenger vehicle according to one of the preceding claims,
**characterized in that**
the reciprocating piston engine has two piston-cylinder units in tandem arrangement, which operate on two counter-rotatable crankshafts.

5. The passenger vehicle according to one of the preceding claims,
**characterized in that**
driving is effected via at least one driving wheel on a rear axle (30) of the vehicle.

6. The passenger vehicle according to one of the preceding claims,
**characterized in that**
a plurality of electric motors (24) are provided, wherein at least one first electric motor (24) is coupled with a driving wheel on the front axle (29) and a second electric motor (24) is coupled with a driving wheel on the rear axle (30).

## Revendications

1. Véhicule particulier multivoies, en particulier véhicule hybride, avec un groupe électrogène (20) qui comprend au moins un générateur pouvant être entraîné via un moteur à pistons alternatifs, une batterie (25) et au moins un moteur électrique (24), dans lequel le moteur à pistons alternatifs, le générateur, et le moteur électrique (24) pouvant être accouplé mécaniquement à au moins une roue motrice du véhicule sont reliés en série les uns aux autres pour l'entraînement du véhicule et le moteur à pistons alternatifs présente deux vilebrequins,
**caractérisé en ce que**
le groupe électrogène (20) composé du moteur à pistons alternatifs et du générateur présente une profondeur en direction longitudinale du véhicule et une largeur transversalement à la direction longitudinale du véhicule, dans lequel la largeur est au plus de 750 mm et la profondeur est au plus de 310 mm, et dans lequel le groupe électrogène (20) présente deux générateurs qui sont respectivement en liaison d'entraînement avec l'un des deux vilebrequins.

2. Véhicule particulier selon la revendication 1,
**caractérisé en ce que**
le groupe électrogène (20) est essentiellement disposé au-dessus de l'essieu avant ou entre l'essieu avant et un habitacle, en particulier une cloison (35), du véhicule.

3. Véhicule particulier selon la revendication 1 ou 2,
**caractérisé en ce que**
le groupe électrogène (20) forme, avec le moteur à pistons alternatifs et le générateur, une unité disposée dans un boîtier de groupe pouvant être isolé thermiquement et/ou par rapport aux vibrations et/ou acoustiquement.

4. Véhicule particulier selon l'une des revendications précédentes,
**caractérisé en ce que**
le moteur à pistons alternatifs présente deux unités piston-cylindre en agencement en tandem, lesquelles travaillent sur deux vilebrequins rotatifs en sens contraire.

5. Véhicule particulier selon l'une des revendications précédentes,
**caractérisé en ce que**
l'entraînement s'effectue via au moins une roue motrice au niveau d'un essieu arrière (30) du véhicule.

6. Véhicule particulier selon l'une des revendications précédentes,
**caractérisé en ce que**
plusieurs moteurs électrique (24) sont prévus, dans lequel au moins un premier moteur électrique (24) est accouplé à une roue motrice au niveau de l'essieu avant (29) et un deuxième moteur électrique (24) est accouplé à une roue motrice au niveau de l'essieu arrière (30).
